# EUROPEAN PATENT APPLICATION

(11) **EP 4 198 896 A1**
(43) Date of publication of application: **21.06.2023**
(21) Application number: 22209871.7
(22) Date of filing: 28.11.2022
(51) Int. Cl.: G06T 7/246, G06T 7/269

(54) **FEATURE TRACKING SYSTEM AND METHOD**

(30) Priority: 16.12.2021 GB 202118271
(71) Applicant: Sony Interactive Entertainment Europe Limited, London W1F 7LP (GB)
(72) Inventor: RAGHOEBARDAJAL, Sharwin, London, W1F 7LP (GB); RUBIO, Jose, London, W1F 7LP (GB); TATTERSALL, Steven, London, W1F 7LP (GB)
(74) Representative: D Young & Co LLP

(57) **Abstract**

A method of point tracking comprises the steps of receiving successive input image frames from a sequence of input image frames comprising an object to track; for each input frame, detecting a plurality of feature points; mapping a 3D morphable model to the plurality of feature points; performing optical flow tracking of flow points between successive input frames; and correcting optical flow tracking for at least a first flow point position responsive to the mapped 3D morphable model.

## Description

### BACKGROUND OF THE INVENTION

### Field of the invention

The present invention relates to a feature tracking system and method.

### Description of the Prior Art

Feature tracking is frequently used for example in the context of motion capture (e.g. performance capture); that is to say, transferring actor expressions from video footage to the 3D mesh of a virtual character.

Current approaches to feature tracking tend to suffer from one or more of a multiplicity of drawbacks:
Firstly, the requirement for consistent high-quality make-up markers to achieve good results; these can necessitate the use of specialist clothing or headgear, and the use of spots or lines on the actor's face that can be uncomfortable or distracting for the actor's own performance or the performance of others interacting with the actor.
Secondly, the number of points tracked is typically very sparse and makes it hard to capture fine details of the performance in the final animation. Furthermore the markers themselves can obscure subtleties in the actor's face.
Thirdly, marker occlusions and other issues during performances (i.e., actors touching their face) frequently result in loss of tracking and catastrophic failures.
Fourthly, tracking technology is often used as a black-box which makes it hard to adapt to specific use-cases, for instance profiting from stereo footage or other camera modalities.
Finally, the quality of the source footage can have a significant impact on the performance of the tracking system (for example due to variations in illumination, video resolution, and the like).

The present invention seeks to mitigate or alleviate some or all of the above-mentioned problems.

### SUMMARY OF THE INVENTION

Various aspects and features of the present invention are defined in the appended claims and within the text of the accompanying description.

In a first aspect, a method of point tracking is provided in accordance with claim 1.

In another aspect, a point tracking system is provided in accordance with claim 12.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of a point tracking system in accordance with embodiments of the present application; and
- Figure 2 is a flow diagram of a method of point tracking in accordance with embodiments of the present application.

### DESCRIPTION OF THE EMBODIMENTS

A feature tracking system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

Embodiments of the present description are applicable to an entertainment system such as a computer or videogame console, a development kit for such a system, or a motion capture system using dedicated hardware or a computer and suitable camera system or systems. In the present application, the terms entertainment system and motion capture system may be interpreted equivalently to mean any such suitable device or system.

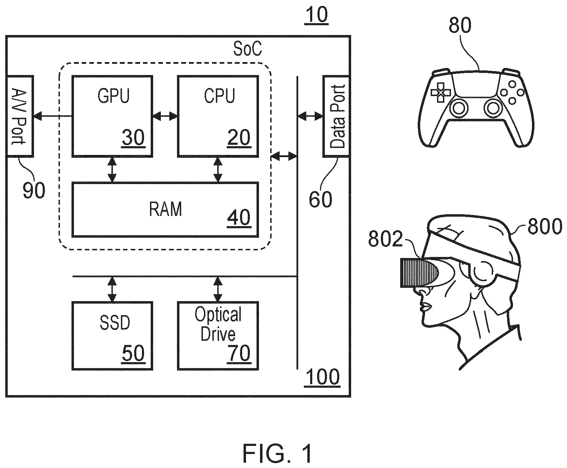

For the purposes of explanation and referring now to the drawings, wherein like reference numerals designate identical or corresponding parts throughout the several views, Figure 1 shows an example of an entertainment system 10 such as the Sony ^{®} PlayStation 5 ^{®} (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet ^{®} port, WiFi ^{®} port, Bluetooth ^{®} port or similar, as appropriate. It may also optionally receive data via an optical drive 70.

Interaction with the system is typically provided using one or more handheld controllers 80, such as the DualSense ^{®} controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 802, worn by a user 800.

Such an entertainment system may be used to consume content generated using motion capture, and / or also to generate motion capture data, for example to drive a user avatar within a game or a virtual social environment. In addition to such 'live' capture scenarios, such a motion capture performances may be used by game developers or film directors to capture actor performances for game characters, or for virtually transcribing actors and performers into a virtual environment. Again, in the present application terms such as 'user', 'actor' and 'performer' may be used interchangeably except where indicated otherwise.

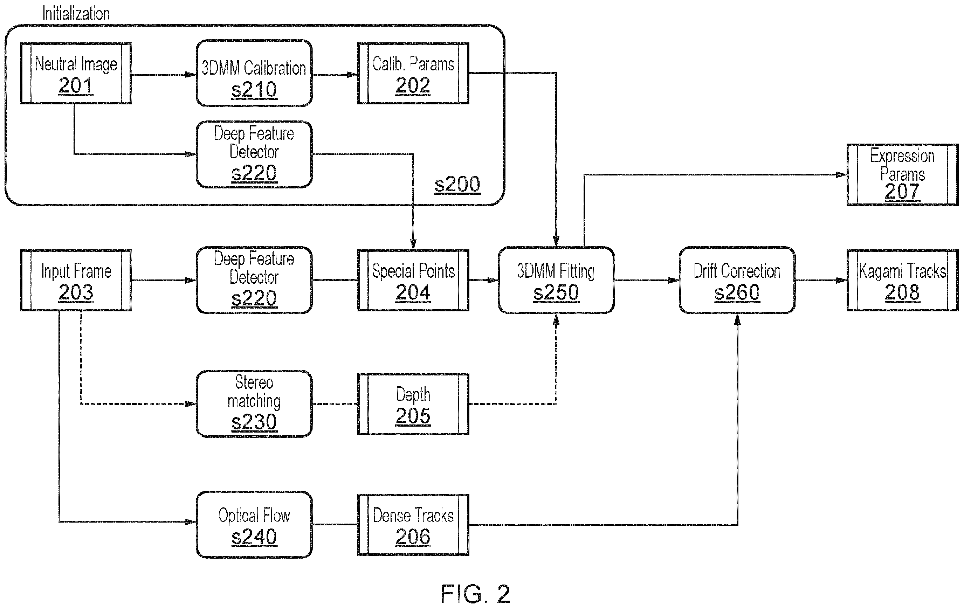

Referring now to Figure 2, in embodiments of the present description, a high density marker-less tracking scheme is proposed for tracking typically a hundred or more points, whilst avoiding or reducing tracking drift of these points with reference to a 3D morphable model (for example of a face, or whole body), which may optionally be calibrated to the specific face / body of the currently captured performer.

The scheme comprises a number of steps.

In a first, optional initialisation step s200, the 3D morphable model (3DMM) is calibrated.

The 3DMM is a mathematical 3D model of a face that is used to help constrain the tracked points to locations anatomically consistent with a human facial expression, as described later herein. The 3DMM may similarly be or comprise a model of a human body. Similarly if an animal is being captured, then the face and/or body of that animal may be used, and so on.

The 3DMM can fit facial expressions and optionally face shapes.

Facial expressions are modelled using combinations of blendshapes, as described elsewhere herein. Meanwhile face shapes are optionally modelled in a similar fashion using combinations of eigenvectors obtained after running principle component analysis (PCA) on a set of training data (a set of face meshes with a neutral expression).

The 3DMM can then be optionally calibrated to the face shape of the specific actor as follows. A neutral image of the actor (e.g. with no expression on the face, or a simple standing pose for a body) is used to calibrate the 3DMM in step s210. As noted above, a PCA based model is previously trained on a dataset of faces (e.g. neutral synthetic faces) to obtain these eigenvectors (e.g. so-called eigenfaces). The PCA parameters ('Calib. Params' 202) indicating the combination of eigenvectors that best approximate the actors face are then determined.

During initialisation, a set of weights that deform a base mesh used for the 3DMM are modified based on the PCA parameters so that the mesh better fits the actor's face. The modified mesh is then kept as the base mesh on which to fit facial expression deformations (blendshapes) for the video sequences with this particular actor.

The fitting process for facial expressions is described later herein, and comprises a deep feature detector in step s220 generating special facial feature points 204 for 3DMM fitting at step s250.

As noted above, the initialisation step may also use a deep feature detector in step s220 to detect the special points 204 for 3DMM fitting.

The deep feature detector is a module the may be a dedicated hardware module, or may for example be the CPU and/or GPU of the entertainment device operating under suitable software instruction.

The deep feature detector detects specific key-points in the input image. This module is typically an ensemble of multiple detectors for performing one or more of the detection of key-points around eyes, detection of key-points around the jaw, detection of key-points around lips, detection of key-points around one or more other significant facial features such as eyebrows (if treated separately from eyes), nose, and ears, segmentation of lips (e.g. for lip sync purposes), the overall facial region, and direction of gaze. Similarly when tracking a body, detection may relate to specific limbs, hands, feet, the torso, and the like. More generally, the deep feature detector detects salient visual features of the tracked object, typically using a plurality of detectors each specialising in a respective feature or feature type.

Whilst these detectors could be provided by template matching, preferably they are typically implemented using deep learning models trained to extract visual features (key points) from respective facial or body regions. These key points typically cover some or all of the face (and/or body) as described above and form the special points 204.

Typically the deep feature detector will generate between 100 and 500 special points 204 on a face, without the need for make-up markers and the like.

Whilst it may be preferable to use respective deep learning models as such respective detectors, optionally such models may be trained on multiple facial or body regions or indeed the entire face or body.

In any event, after any optional initialisation, motion capture may begin. An input image frame 203 is provided to the deep feature detector to identify the special points 204. This is done in a similar manner as for the optional neutral image 201 described previously herein.

Optionally, the input image frame is a stereoscopic image. If so then a depth image can be generated by applying a stereo vision algorithm on the left/right images at optional step s230. The special points can then be elevated according to the depth values at the corresponding points in the depth image to enable the special points to be tracked in 3D on the face or body surface, which can improve the fitting result of the 3DMM, and also enable the output of 3D tracking data.

At step s240, an optical flow module computes optical flow tracks across consecutive input frames 203. The optical flow is initialised to track specific locations on the face (or body) for example from the first input frame 203 in a given input sequence.

The specific locations are typically at least a subset of the special points 204 identified by the deep feature detector. Hence typically at step s240 the optical flow module tracks some or all of the special points across consecutive input frames. However, alternatively or in addition the optical flow module can track points independent of the special points 204. Hence more generally these can be termed 'flow points' and may or may not fully coincide with the special points 204.

The output is a dense set of tracks (e.g. tracked flow points) 206, and typically in the order of 100-500 tracks.

The optical flow module is a module that may be a dedicated hardware module, or may for example be the CPU and/or GPU of the entertainment device operating under suitable software instruction.

A problem with optical flow tracking is that the tracking can drift. To mitigate this, the optical flow is checked / corrected using the 3D morphable model, as described later herein.

The 3D morphable model itself is typically a linear blendshape-based model of a human face, as used in the art for animation. These blend-shapes are typically hand-crafted by artists as a library of 3D offsets applied on top of a neutral face base mesh, which as noted previously herein may be separately calibrated to the shape of the particular actor.

The blendshape model comprises a plurality of facial expressions, or blendshape targets, and a given facial expression is a linear combination of a number of these. As such it is similar to the construction of a given face from contributions of so-called eigenfaces, and indeed blendshape targets can be selected from principle component analysis of training images of facial expressions in an analogous manner.

The 3D morphable model may be maintained, fitted and optionally adjusted/calibrated by a 3DMM module. This module may be a dedicated hardware module, or may for example be the CPU and/or GPU of the entertainment device operating under suitable software instruction

In a step s250, the 3DMM is fitted to the visual features of the current face expression extracted by the deep feature detector (e.g. some or all of the special points 204). The fitting is optimized using a nonlinear least squares method that minimizes the projection error of a subset of vertices of the 3D face of the model, against the location of the special features computed by the deep feature detector from the input image.

The algorithm can optimize two types of parameters:
a. Facial Expression: A set of blendshape weights that determine the expression of the actor at a given frame. The blendshape weights are a set of scalars that scale the offsets (i.e. the amount of deformation applied to the base mesh). This deformation moves the key points on the mesh, and their correspondence with the detected special points 204 can be used to determine when the resulting expression best matches the actor's expression in the image.
b. Camera pose: a 6DOF transform that models the orientation of the camera with respect to the actor. These camera parameters enable computation of the image projection, and can optionally be used to model camera shake or motion that could negatively impact the tracking results.

Hence the 3DMM fitting step determines a 3D morphable model that fits the expression and relative pose of the actor's face (as defined at some or all of the special points).

As noted previously, the base mesh modified by the blendshapes may optionally also use calibration parameters that morph the model to the anatomic proportions of the actor's face if these were determined in an initialisation step.

Notably, fitting the 3DMM to some or all of the special points 204 of the actor's face results in a model that closely approximates the actual current expression of the actor, but whose key points are not corrupted by noise, classification errors and other data outliers that can occur with the detection of the special points.

Hence fitting the 3DMM to some or all of the special points 204 of the actor's face creates a regularised version of the actor's facial expression that best fits the collective indications of the special points but removes irregularities.

Hence if a percentage of the special points are misclassified / mislocated so that they are in positions that do not correspond to a face that can be expressed using the blendshapes of the 3DMM (for example if a portion of the lip forms an unexpected shape) then these outliers are not represented within the 3DMM as it has constraints on permissible expressions.

A similar principle applies to a 3DMM for the whole body.

The parameters of the model (e.g. indicating the selected blendshapes and their relative contributions, etc), can optionally be output separately as expression parameters 207 to drive animation or other processes if desired.

It will be appreciated that the fitted 3DMM thus represents a best fit for the identified special points to a facial expression constrained to be possible or valid according to the blendshapes. This in turn also helps to identify special points that have been misclassified if they indicate part of the face at a position that is deemed impossible or invalid (e.g. if a nose shadow is partially identified as belonging to the nose, making the nose appear to suddenly veer to one size).

It will also be appreciated that the 3D morphable model, as a regularised representation of the special points, can similarly be used to correct drift in the optical flow process, as follows.

Once the 3DMM is fitted and the optical flow is computed, a drift correction module can operate in step s260.

The drift correction module is a module the may be a dedicated hardware module, or may for example be the CPU and/or GPU of the entertainment device operating under suitable software instruction.

In step s260, optical flow tracks can be checked and/or corrected using one or more of the following heuristics:
i. The flow points cannot be located very far from the projected 3DMM points. This is directly true for flow points that are special points 204. Meanwhile for any flow points that are tracked separately from the special points, optionally a spatial relationship between those flow points and nearby 3DMM points and/or special points can be maintained to implement an similar constraint.
   - This constraint prevents tracked flow points from drifting into positions inconsistent with the possible/valid expression formed by the 3DMM model, and thus keeps the optical flow tracker correct.
   - If a flow point is identified to drift more than a predetermined distance from the projected 3DMM point (or a from an expected spatial relationship with such points, as applicable), then the flow point can be reverted to the projected / expected point. Alternatively, the flow point can be reverted to a point that is an interpolation between neighbouring flow points, if that interpolation meets this heuristic. Alternatively, the flow point can be reverted to a point that is an interpolation between the current flow point and that projected 3DMM point, if that interpolation meets this heuristic. Such interpolations correct the flow point whilst reducing any apparent visual discontinuity caused by the correction.
ii. The flow points in certain contours should not intersect (e.g. outer/inner lips contours, outer/inner eye contours).
   - Whilst heuristic i) helps to keep flow points within a predetermined distance from projected 3DMM points, in some cases that predetermined distance is large enough that there is still scope for visually disruptive errors. In particular lips and eyes can comprise subjectively important features that are physically very close. Whilst these flow points may be located close to the projected 3DMM points optionally it is also preferable for them to meet this additional constraint that they should not intersect (or put another way, the lines or contours these points represent should not meet or cross except at or within a small predetermined tolerance of points defined by the 3DMM).
   - A similar corrective approach to that outlined for heuristic i) can be used.
iii. The flow points in certain contours should keep a consistent distance and orientation.
   - Like heuristic ii., whilst heuristic i) helps to keep flow points within a predetermined distance from projected 3DMM points, separately there are certain relationships between and within facial features that should remain consistent. For example, typically the mid-point of the upper and lower eyelids should be parallel. Meanwhile for a body, typically the limbs should maintain their apparent length and be keep an equal length to the corresponding limb.
   - A similar corrective approach to that outlined for heuristic i) can be used.

It will be appreciated that when referring to altering a position of a flow point, typically this also means altering the track of the flow point, either directly (by correcting the track value) or indirectly (by correcting the flow point position before calculating an updated tracking, or optionally by re-running the tracking process with the corrected position information).

Hence, by using special points on the face or body, typically identified by one or more deep learning feature detectors, a 3D morphable model of the actors face corresponding to the expression defined by those special points can be generated; this 3DMM can then be used to correct any drift in optical flow tracking of points (typically but not necessarily some or all of the special points) to keep them consistent with a possible or valid expression as defined by the 3DMM, and optionally also correct for more subtle effects of tracking drift within and between facial or body features.

The resulting checked / corrected tracks, referred to herein as 'Kagami tracks' 208, can then be output to drive performance capture for the chosen activity, whether this is driving a live avatar within a game or social virtual environment, inputting body moves into a dance game or similar (either to play or to record a reference performance for subsequent comparisons), capture a performance for reproduction by a video game character, or capture a performance for use in a movie or TV show, or any similar such use of optical flow tracks 208, special point values 204, and/or 3DMM expression parameters 207.

Referring again to Figure 2, in a summary embodiment of the present description, a method of point tracking comprises the following steps.
- In a first step, receiving successive input image frames 203 from a sequence of input image frames comprising an object (such as an actor) to track, as described elsewhere herein.
- In a second step s220, for each input frame, detecting (e.g. by a deep fature detectors comprising one or more deep learning systems) a plurality of feature points (e.g. special points 204), as described elsewhere herein.
- In a third step s250, mapping a 3D morphable model to the plurality of feature points, as described elsewhere herein.
- In a fourth step s240, performing optical flow tracking of flow points (which typically comprise at least a subset of the feature points 204) between successive input frames, as described elsewhere herein.
- In a fifth step s250, correcting optical flow tracking for at least a first flow point position responsive to the mapped 3D morphable model, as described elsewhere herein.

It will be appreciated that at least the third and fourth steps may occur in the opposite order or in parallel.

It will be apparent to a person skilled in the art that variations in the above method corresponding to operation of the various embodiments of the apparatus as described and claimed herein are considered within the scope of the present invention, including but not limited to that:
- in an instance of the summary embodiment, the flow points comprise some or all of the detected feature points, as described elsewhere herein;
- in an instance of the summary embodiment, the feature points are detected using one or more machine learning models, as described elsewhere herein;
   - in this instance, optionally respective groups of feature points are detected by respective machine learning models trained to detect respective visual features of the object, as described elsewhere herein;
- in an instance of the summary embodiment, the object comprises one or more selected from the list consisting of a face and a body, as described elsewhere herein;
   - in this instance, optionally the 3D morphable model is formed is a linear blendshape-based model, as described elsewhere herein;
   - similarly in this instance, optionally the method comprises the step of calibrating the 3D morphable model to the anatomic proportions of a person depicted within the input image frames, as described elsewhere herein;
- in an instance of the summary embodiment, the successive input image frames comprise stereoscopic image pairs; and the method comprises the steps of generating a depth map from the stereoscopic image pair, mapping detected feature points to corresponding depth positions, and mapping the 3D morphable model to the plurality of feature points at the mapped depth positions, as described elsewhere herein;
- in an instance of the summary embodiment, the step of correcting optical flow tracking comprises one or more selected from the list consisting of:
   i. altering the position of a flow point that is more than a predetermined distance from a corresponding point of the 3D morphable model to reduce that distance;
   ii. altering the position of a flow point if a corresponding point of the 3D morphable model corresponds to a predetermined feature, and the position of the flow point would cause that predetermined feature to cross or intersect with another predetermined feature; and
   iii. altering the position of a flow point if a corresponding point of the 3D morphable model corresponds to a predetermined feature, and the position of the flow point would cause that predetermined feature to have a positional or orientational relationship with another predetermined feature that would be inconsistent with a predetermined relationship,
   as described elsewhere herein; and
- in an instance of the summary embodiment, the method comprises the step of outputting for the current input image frame one or more selected from the list consisting of:
   i. corrected optical flow tracking data;
   ii. expression parameters corresponding to the 3D morphable model; and
   iii. feature point data,
as described elsewhere herein.

It will be appreciated that the above methods may be carried out on conventional hardware suitably adapted as applicable by software instruction (e.g. entertainment device 10) or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Hence in a summary embodiment of the present description, a point tracking system comprises the following.

Firstly, a video input module (e.g. data port 60 or A/V port 90 of entertainment device 10, or a prerecorded source such as optical drive 70 or data drive 50, in conjunction with CPU 20 and/or GPU 30) configured (for example by suitable software instruction) to receive successive input image frames 203 from a sequence of input image frames comprising an object to track, as described elsewhere herein.

Secondly, a feature detector module (e.g. CPU 20 and/or GPU 30) configured (for example by suitable software instruction) to detect a plurality of feature points for each input frame, as described elsewhere herein.

Thirdly, a 3D morphable model module (e.g. CPU 20 and/or GPU 30) configured (for example by suitable software instruction) to map a 3D morphable model to the plurality of feature points, as described elsewhere herein.

Fourthly, an optical flow module (e.g. CPU 20 and/or GPU 30) configured (for example by suitable software instruction) to perform optical flow tracking of flow points between successive input frames, as described elsewhere herein.

And fifthly, a drift correction module (e.g. CPU 20 and/or GPU 30) configured (for example by suitable software instruction) to correct optical flow tracking for at least a first flow point position responsive to the mapped 3D morphable model, as described elsewhere herein.

It will be apparent to a person skilled in the art that variations in the above system corresponding to the various embodiments of the method as described and claimed herein are considered within the scope of the present invention, including but not limited to that:
- In an instance of the summary embodiment, the flow points comprise some or all of the detected feature points, as described elsewhere herein;
- In an instance of the summary embodiment, respective groups of feature points are detected by respective machine learning models trained to detect respective visual features of the object, as described elsewhere herein;
- in an instance of the summary embodiment, the step of correcting optical flow tracking comprises one or more selected from the list consisting of:
   i. altering the position of a flow point that is more than a predetermined distance from a corresponding point of the 3D morphable model to reduce that distance;
   ii. altering the position of a flow point if a corresponding point of the 3D morphable model corresponds to a predetermined feature, and the position of the flow point would cause that predetermined feature to cross or intersect with another predetermined feature; and
   iii. altering the position of a flow point if a corresponding point of the 3D morphable model corresponds to a predetermined feature, and the position of the flow point would cause that predetermined feature to have a positional or orientational relationship with another predetermined feature that would be inconsistent with a predetermined relationship,
   as described elsewhere herein; and
- in an instance of the summary embodiment, the method comprises the step of outputting for the current input image frame one or more selected from the list consisting of:
   i. corrected optical flow tracking data;
   ii. expression parameters corresponding to the 3D morphable model; and
   iii. feature point data,
   as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of point tracking, comprising the steps of:
receiving successive input image frames from a sequence of input image frames comprising an object to track;
for each input frame, detecting a plurality of feature points;
mapping a 3D morphable model to the plurality of feature points;
performing optical flow tracking of flow points between successive input frames; and
correcting optical flow tracking for at least a first flow point position responsive to the mapped 3D morphable model.

2. The method of claim 1, in which:
the flow points comprise some or all of the detected feature points.

3. The method of claim 1 or claim 2, in which:
the feature points are detected using one or more machine learning models.

4. The method of claim 3, in which:
respective groups of feature points are detected by respective machine learning models trained to detect respective visual features of the object.

5. The method of any preceding claim, in which:
the object comprises one or more selected from the list consisting of:
i. a face; and
ii. a body.

6. The method of claim 5, in which:
the 3D morphable model is a linear blendshape-based model.

7. The method of claim 5 or claim 6, comprising the step of:
calibrating the 3D morphable model to the anatomic proportions of a person depicted within the input image frames.

8. The method of any preceding claim, in which:
the successive input image frames comprise stereoscopic image pairs; and the method comprises the steps of:
generating a depth map from the stereoscopic image pair;
mapping detected feature points to corresponding depth positions; and
mapping the 3D morphable model to the plurality of feature points at the mapped depth positions.

9. The method of any preceding claim, in which the step of correcting optical flow tracking comprises one or more selected from the list consisting of:
i. altering the position of a flow point that is more than a predetermined distance from a corresponding point of the 3D morphable model to reduce that distance;
ii. altering the position of a flow point if a corresponding point of the 3D morphable model corresponds to a predetermined feature, and the position of the flow point would cause that predetermined feature to cross or intersect with another predetermined feature; and
iii. altering the position of a flow point if a corresponding point of the 3D morphable model corresponds to a predetermined feature, and the position of the flow point would cause that predetermined feature to have a positional or orientational relationship with another predetermined feature that would be inconsistent with a predetermined relationship.

10. The method of any preceding claim, comprising the step of outputting for the current input image frame one or more selected from the list consisting of:
i. corrected optical flow tracking data;
ii. expression parameters corresponding to the 3D morphable model; and
iii. feature point data.

11. A computer program comprising computer executable instructions adapted to cause a computer system to perform the method of any one of the preceding claims.

12. A point tracking system, comprising:
a video input module configured to receive successive input image frames from a sequence of input image frames comprising an object to track;
a feature detector module configured to detect a plurality of feature points for each input frame;
a 3D morphable model module configured to map a 3D morphable model to the plurality of feature points;
an optical flow module configured to perform optical flow tracking of flow points between successive input frames; and
a drift correction module configured to correct optical flow tracking for at least a first flow point position responsive to the mapped 3D morphable model.

13. The point tracking system of claim 12, in which:
the flow points comprise some or all of the detected feature points.

14. The point tracking system of claim 12 or claim 13, in which:
respective groups of feature points are detected by respective machine learning models trained to detect respective visual features of the object.

15. The point tracking system of any one of claims 12 to 14, in which:
the drift correction module is configured to correct optical flow tracking by one or more selected from the list consisting of:
i. altering the position of a flow point that is more than a predetermined distance from a corresponding point of the 3D morphable model to reduce that distance;
ii. altering the position of a flow point if a corresponding point of the 3D morphable model corresponds to a predetermined feature, and the position of the flow point would cause that predetermined feature to cross or intersect with another predetermined feature; and
iii. altering the position of a flow point if a corresponding point of the 3D morphable model corresponds to a predetermined feature, and the position of the flow point would cause that predetermined feature to have a positional or orientational relationship with another predetermined feature that would be inconsistent with a predetermined relationship.
